# EUROPEAN PATENT SPECIFICATION

(11) **EP 3 748 908 B1**
(45) Date of publication and mention of the grant of the patent: **07.06.2023**
(21) Application number: 18903752.6
(22) Date of filing: 29.12.2018
(51) Int. Cl.: H04L 41/5006, H04L 41/5041, H04L 41/5051, H04L 41/40

(54) **METHOD, SYSTEM, NETWORK DEVICE, STORAGE MEDIUM FOR CREATING A NETWORK SLICE**
VERFAHREN, SYSTEM, NETZWERKVORRICHTUNG, SPEICHERMEDIUM ZUR ERZEUGUNG EINES NETZWERKSLICE
PROCÉDÉ, SYSTÈME, DISPOSITIF DE RÉSEAU, SUPPORT D'INFORMATIONS PERMETTANT DE CRÉER UNE TRANCHE DE RÉSEAU

(30) Priority: 02.02.2018 CN 201810104058
(43) Date of publication of application: 09.12.2020
(73) Proprietor: ZTE Corporation, Shenzhen, Guangdong 518057 (CN)
(72) Inventor: ZHOU, Junchao, Shenzhen, Guangdong 518057 (CN); ZHANG, Qiang, Shenzhen, Guangdong 518057 (CN); ZHANG, Jin, Shenzhen, Guangdong 518057 (CN)
(74) Representative: Aipex B.V.
(86) International application number: PCT/CN2018/125809
(87) International publication number: WO 2019/149016

(56) References cited:
- EP-A1- 3 648 401
- CN-A- 105 812 217
- CN-A- 106 792 692
- CN-A- 109 120 426
- US-A1- 2017 054 595
- "3rd Generation Partnership Project; Technical Specification Group Services and System Aspects; Telecommunication Management; Provisioning of network slicing for 5G networks and services (Release 15)", 3GPP STANDARD; TECHNICAL SPECIFICATION; 3GPP TS 28.531, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V0.2.0, 4 January 2018 (2018-01-04), pages 1-13, XP051392279, [retrieved on 2018-01-04]
- ANONYMOUS: "3rd Generation Partnership Project; Technical Specification Group Services and System Aspects; Telecommunication management; Study on management and orchestration of network slicing for next generation network (Release 15)", 3GPP STANDARD; TECHNICAL REPORT; 3GPP TR 28.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V15.1.0, 4 January 2018 (2018-01-04), pages 1-75, XP051392292, [retrieved on 2018-01-04]
- HUAWEI: "Use cases for end to end Network slices provisioning", ETSI DRAFT; ZSM(18)000013R1_USE_CASES_FOR_MANAGEMENT_A ND_ORCHESTRATION_OF_NETWORK_SLICIN, EUROPEAN TELECOMMUNICATIONS STANDARDS INSTITUTE (ETSI), 650, ROUTE DES LUCIOLES ; F-06921 SOPHIA-ANTIPOLIS ; F , vol. ISG - ZSM 31 January 2018 (2018-01-31), pages 1-3, XP014329133, Retrieved from the Internet: URL:docbox.etsi.org\ISG\ZSM\05-Contributio ns\2018\2018_01_10_PL_ZSM#01-Kick-off_Meet ing_Sophia\ZSM(18)000013r1_Use_cases_for_m anagement_and_orchestration_of_Network_sli cin.docx [retrieved on 2018-01-31]

## Description

### TECHNICAL FIELD

The present disclosure relates to the field of communication technologies and, for example, relates to a network slice creation method, a network device and a storage medium.

### BACKGROUND

An era of the 5th generation mobile communication technology (5G) is coming. In the 5G era, service object of mobile network is no longer only mobile phone, but multiple types of devices such as mobile phone, tablet, fixed sensor, vehicle. Application scenarios are also diversified, for example, mobile broadband, large-scale internet, mission-critical internet and the like. Also, requirements to be satisfied are diversified, for example, requirements on mobility, security, latency, reliability and the like. Just since different application scenarios have different demands for network function, system performance, security, user experience and the like, if a same network is provided to serve different application scenarios, this network will be very complex and unwieldy, and cannot satisfy ultimate performance requirements of applications. Meanwhile, network operation and maintenance becomes quite complex, and network-operation cost is increased. On the contrary, if private networks are deployed to serve different scenarios according to different requirements of different business scenarios, and each network only has function(s) required by the corresponding application scenario, then service efficiency will be greatly improved, and network performance required by the application scenario can also be guaranteed. In this way, the network operation and maintenance becomes simple, and investment cost and operation-and-maintenance cost are reduced. This is the network slicing technology, and the above private network is an example of a network slice.

However, although related protocols have proposed development direction of such technique of network slicing, no specific solution is provided for how to deploy the network slice.

Further relevant technologies are also known from "3rd Generation Partnership Project; Technical Specification Group Services and System Aspects; Telecommunication Management; Provisioning of network slicing for 5G networks and services (Release 15)", 3GPP STANDARD; TECHNICAL SPECIFICATION; 3GPP TS 28.531, vol. SA WG5, no. V0.2.0, XP051392279, 4 January 2018 (2018-01-04); ANONYMOUS: "3rd Generation Partnership Project; Technical Specification Group Services and System Aspects; Telecommunication Management; Study on management and orchestration of network slicing for next generation network (Release 15)", 3GPP STANDARD; TECHNICAL REPORT, 3GPP TR 28.801, vol. SA WGS, no. V15.1.0, XP051392292, 4 January 2018 (2018-01-04); HUAWEI: "Use cases for end to end Network slices provisioning", ETSI DRAFT, vol. ISG-ZSM, XP014329133, 31 January 2018 (2018-01-31); and US 2017/054595 A1 (HUAWEI TECHNOLOGIES CO.,LTD.) 23 February 2017 (2017-02-23).

### SUMMARY

Embodiments of the present disclosure provide a network slice creation method, a network device and a storage medium and propose a network slice deployment solution, solving the problem that network slice deployment cannot be implemented in the related technology. The features of the method, device and storage medium according to the present invention are defined in the independent claims. Further improvements are provided in the dependent claims.

An embodiment of the present disclosure provides a network slice creation method according to claim 1.

An embodiment of the present disclosure further provides a network device according to claim 8.

An embodiment of the present disclosure further provides a computer-readable storage medium according to claim 9.

### BRIEF DESCRIPTION OF DRAWINGS

FIG. 1 is a flowchart of a network creation method according to an embodiment;
FIG. 2 is a schematic diagram of a display interface of a subscription client according to an embodiment;
FIG. 3 is a structural diagram of a network creation system according to an embodiment;
FIG. 4 is a schematic diagram of a network device according to an embodiment;
FIG. 5 is a schematic diagram of another network device according to an embodiment;
FIG. 6 is a structural diagram of hardware of a network device according to an embodiment;
FIG. 7 is a schematic diagram of a network slice management system according to an embodiment; and
FIG. 8 is a flowchart of another network creation method according to an embodiment.

### DETAILED DESCRIPTION

The present disclosure will be described in detail through embodiments in conjunction with accompanying drawings. The embodiments described herein are intended to explain but not to limit the present disclosure.

### Embodiment one

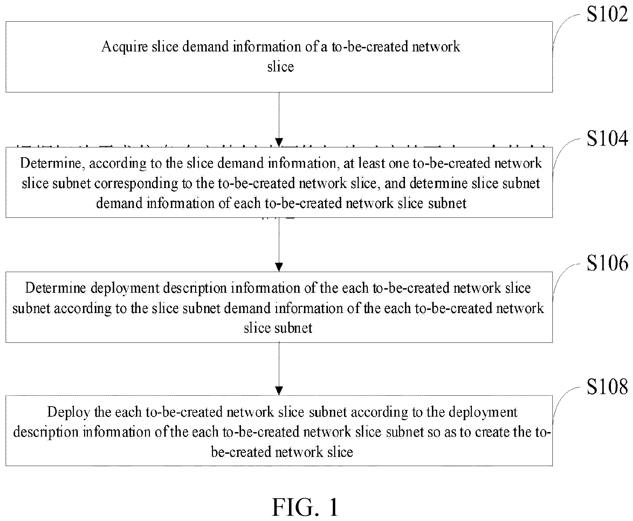

An embodiment provides a network slice creation method to create and deploy a network slice so that the network slice is really applied. Referring to FIG. 1, the method provided by the embodiment includes the steps described below.

In S102, slice demand information of a to-be-created network slice is acquired.

The slice demand information of the to-be-created network slice can reflect expectation of a network slice demander on a capability of the to-be-created network slice after creation, that is, at least one communication-service capability requirement of the slice demander for the to-be-created network slice. In an embodiment, the slice demand information may take a form of a service-level agreement (SLA) indicator. The service-level agreement refers to a protocol or contract agreed between a service-providing enterprise and a client about quality, level, performance and the like of a service. The slice SLA indicator information of the to-be-created network slice is used for characterizing the capability requirement of the slice demander for the to-be-created network slice. In this way, the capability requirement of the slice demander for the to-be-created network slice can be embodied and take a relatively general form so as to be transferred between multiple network elements of a network slice creation system. In general, the slice SLA indicator information includes at least one of user capacity or a quality of service guarantee parameter. In an embodiment, the slice SLA indicator information of the to-be-created network slice may further includes other SLA indicators. The user capacity indicator represents the quantity of users that the to-be-created network slice can accommodate. The quality of service guarantee parameter may include an indicator, such as a bandwidth, a latency, a jitter and a packet loss rate, that has performance requirements for the to-be-created network slice.

In an embodiment, the slice SLA indicator information may further include at least one of the number of online users, a traffic model, a peak rate, an average rate, a guaranteed rate, a business class, a sharing requirement, a disaster tolerance mode, an acceleration support mode, a security level, a slice type, fault recovery time, key performance indicators (KPI) monitoring and statistical requirements, a fault management requirement, a configuration management requirement or the like of the to-be-created network slice.

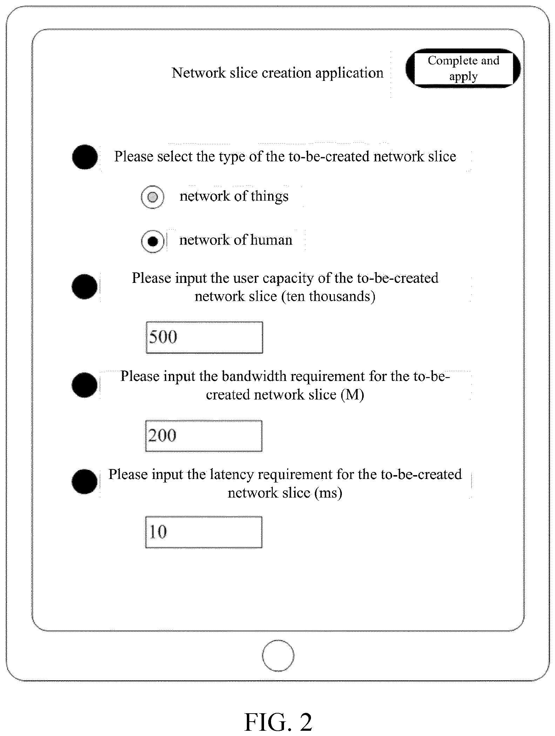

The SLA is a professional and standard protocol, so it is very easy to implement related interaction between network elements supporting the SLA. However, it is difficult for a common user to directly convert a demand of the common user for the to-be-created network slice into standard SLA indicator information. Therefore, in an embodiment, when the slice demander makes a slice creation request to a network slice system, the slice demander may describe the request in a natural language or the like. For example, the network slice creation system provides a subscription client of the network slice, and provides multiple options taking the form of the natural language in the subscription client, as shown in a display interface of the subscription client according to FIG. 2. The slice demander may put forward a demand in the display interface of the subscription client in a manner of selecting, inputting or the like. The above subscription client may operate on a fixed terminal and may operate on a mobile terminal such as a mobile phone, a tablet or the like. After the subscription client receives the demand put forward by the slice demander, a communication service management function (CSMF) network element may convert the demand of the slice demander into the slice SLA indicator information of the to-be-created network slice according to the SLA, and then transmit the slice SLA indicator information to the network slice creation system. Therefore, in an embodiment, the network slice creation system may receive the slice SLA indicator information sent by the CSMF network element, so as to obtain slice demand information of the to-be-created network slice.

In an embodiment, the slice demand information of the to-be-created network slice may take a form other than the SLA indicator as long as a network element of the network slice creation system supports the form.

In S104, at least one to-be-created network slice subnet corresponding to the to-be-created network slice is determined according to the slice demand information, and slice subnet demand information of each to-be-created network slice subnet is determined according to the slice demand information.

After one network slice is created and operates, capabilities of the network slice may be reflected in two aspects. One capability is function that the network slice may implement. For example, the network slice is a network slice for internet of things or a network slice for human-to-human communication, and the network slice is a network slice for voice calls or a network slice for video viewing. The other capability is performance of the network slice. For example, the network slice is a network slice having a great latency or a network slice having a small latency, the network slice is a network slice having great user capacity or a network slice having smaller user capacity, and the network slice is a network slice having a large bandwidth or a network slice having a smaller bandwidth. Accordingly, the slice demander actually has expectation on the to-be-created network slice in the two aspects. Therefore, the slice demand information includes slice function information used for characterizing a function demand of the slice demander to the to-be-created network slice, and also includes slice performance information used for characterizing a performance demand of the slice demander to the to-be-created network slice. Continuing with the example where the slice demand information is the slice SLA indicator information, in the above slice SLA indicator information, the user capacity, the bandwidth, the latency, the jitter and the packet loss rate, the peak rate, the average rate, the guaranteed rate and the like are the slice performance information, while the business class, the slice type and the like are the slice function information.

Since the slice demand information acquired by the network slice creation system includes both the slice function information and the slice performance information, the network slice creation system may determine, according to the slice function information of the slice demand information, the at least one to-be-created network slice subnet corresponding to the to-be-created network slice. In an embodiment, the network slice creation system stores a first mapping in advance, and the first mapping relation includes a correspondence between different slice function information and network slice subnets. The slice function information of one network slice is hereinafter referred to as "one slice function information" for ease of description. However, one slice function information is not used for limiting the slice function information to only one piece of information, but is used for characterizing information having requirements for one type of function. Therefore, one slice function information may correspond to one network slice subnet, and may correspond to multiple network slice subnets. For example, Table 1 shows a first mapping table storing the first mapping relation.

**Table 1**

| SLICE FUNCTION INFORMATION | NETWORK SLICE SUBNET |
|---|---|
| P | Network slice subnet a |
| ... | ... |
| X | Network slice subnet a, network slice subnet c |
| Y | Network slice subnet b, network slice subnet c |
| Z | Network slice subnet a, network slice subnet b, network slice subnet c, network slice subnet d |

After acquiring the slice function information of the slice demand information of the to-be-created network slice, the network slice creation system may determine, according to the first mapping relation shown in Table 1, the to-be-created network slice subnet corresponding to the to-be-created network slice. For example, if the slice demand information of the to-be-created network slice includes slice function information X, then the network slice creation system can determine that network slice subnet a and network slice subnet c are needed for creating the corresponding network slice. That is, this to-be-created network slice can be decomposed into to-be-created network slice subnet a and to-be-created network slice subnet c.

In an embodiment, the first mapping relation may take a form of a table, and may also be reflected by an algorithm. For example, the first mapping relation is a first preset algorithm, and the first preset algorithm may be at least one of a neural network algorithm, a deep learning algorithm, a boltzmann machine algorithm or the like. In this case, after the slice demand information of the to-be-created network slice is acquired, the slice function information is acquired from the slice demand information, and then the at least one to-be-created network slice subnet corresponding to the to-be-created network slice is computed by using the first preset algorithm.

The slice demand information of the to-be-created network slice is function and performance requirements for the whole to-be-created network slice, and function and performance of one network slice are comprehensively reflected by function and performance of the each to-be-created network slice subnet of the network slice. Therefore, after determining the at least one to-be-created network slice subnet corresponding to the to-be-created network slice, the network slice creation system should decompose the slice function and performance of the to-be-created network slice onto the each to-be-created network slice subnet. In an embodiment, the network slice creation system may decompose the slice demand information onto the each to-be-created network slice subnet according to a second mapping relation to form the slice subnet demand information of the to-be-created network slice subnet. Part performance of the network slice is performance superposition of multiple network slice subnets, while some other performance requires the each slice subnet to satisfy. For example, the latency indicator of the network slice is the first type, and a latency of one network slice is actually latency superposition of all network slice subnets. Assuming that one network slice is composed of network slice subnet a, network slice subnet b and network slice subnet c, latency t of the network slice is equal to latency sum of network slice subnet a, network slice subnet b and network slice subnet c, that is, t = ta + tb + tc. The bandwidth indicator of the network slice requires a bandwidth of the each network slice subnet to separately satisfy the requirement. Similarly, the network slice including network slice subnet a, network slice subnet b and network slice subnet c is used as an example, and if a bandwidth requirement of the slice demander for the network slice is R, then the bandwidth of the each network slice subnet of the network slice should be greater than or equal to R. Therefore, two performance indicators of the latency and the bandwidth are integrated; and then the performance demand information of network slice subnet a is ta and R, the performance demand information of network slice subnet b is tb and R, and the performance demand information of network slice subnet c is tc and R. Similar to such type of performance indicators, for example, the bandwidth, some performance indicators require the each network slice subnet to satisfy a corresponding performance requirement. However, when a same indicator is quantized onto different network slice subnets, corresponding values are different. For example, if the slice demander requires call attempts per second (CAPS) of a certain to-be-created network slice to be 10000 per second, then the CAPS value of an network slice subnet-radio access network (NSS-RAN) is 500 per second, the CAPS value of a network slice subnet-SGCore (NSS-SGC) includes 2000 per second of a user-plane network element and 3000 per second of a control-plane network element, and the CAPS of a network slice subnet-bearer network (NSS-BN) is 35000 per second. This is similar to currency exchange conversion rate in life. Currency with same value corresponds to different numerical values in different countries or regions.

In the embodiment, the second mapping relation may be stored in the table and take a form of a second mapping table, and when both the first mapping relation and the second mapping relation take the form of a mapping table, a first mapping table for storing the first mapping relation and the second mapping table for storing the second mapping relation may be two subtables of a same table. In addition, the second mapping relation may take the form of a second preset algorithm. In an embodiment, the second preset algorithm may be at least one of the neural network algorithm, the deep learning algorithm, the boltzmann machine algorithm or the like. In an embodiment, the first mapping relation and the second mapping relation are collectively referred to as a first overall mapping. Based on the first overall mapping relation, the each to-be-created network slice subnet and the slice subnet demand information of the each to-be-created network slice subnet may be obtained according to the slice demand information of the to-be-created network slice.

In S106, deployment description information of the each to-be-created network slice subnet is determined according to the slice subnet demand information of the each to-be-created network slice subnet.

After the network slice creation system obtains the corresponding to-be-created network slice subnet according to the slice demand information of the to-be-created network slice, the network slice creation system may acquire the corresponding deployment description information according to the sub slice demand information of the each to-be-created network slice subnet. In the embodiment, slice subnet demand information of a certain to-be-created network slice subnet represents what function and what performance the to-be-created network slice subnet should have to satisfy an overall requirement of the slice demander for the to-be-created network slice. The deployment description information is used for describing how to deploy the to-be-created network slice subnet to implement excepted function and performance of the to-be-created network slice subnet.

In an embodiment, for the certain to-be-created network slice subnet, the network slice creation system may determine a network service descriptor of the to-be-created network slice subnet according to a third mapping relation, and then convert, according to a fourth mapping relation, the slice subnet demand information of the to-be-created network slice subnet into the deployment description information specific to the network service descriptor. The deployment description information specific to the network service descriptor of the to-be-created network slice subnet is the deployment description information of the to-be-created network slice subnet.

In general, network slice subnets are in a one-to-one correspondence with network service descriptors. For example, for network slice subnet a, the network service descriptor of network slice subnet a is NSDa; and for network subslice b, the network service descriptor of network slice subnet b is NSDb. After the network service descriptor of the network slice subnet is obtained, the slice subnet demand information of the to-be-created network slice subnet may be converted, according to the fourth mapping relation, into the deployment description information specific to the network service descriptor of the to-be-created network slice subnet. For example, a latency indicator specific to the NSS-SGC is converted into a deployment parameter requirement for the user-plane network element device in a 5GCore (5GC) network service descriptor, such as the requirement for deploying the user-plane network element device in an edge data center (DC) or the requirement for deploying the user-plane network element device with at least two instances, and the like. As another example, a latency indicator specific to the NSS-BN is converted into a requirement on a network-link parameter requirement, such as a forwarding path, a bearer network segmentation technique and the like. The segmentation technique here includes, but is not limited to, at least one of a virtual extensible local area network (VxLAN), flex Ethernet (FlexE), a virtual local area network (VLAN), multi-protocol label switching (MPLS) or the like.

In the embodiment, the third mapping relation or the fourth mapping relation may be stored in the table and take the form of a mapping table. For example, Table 2 shows a mapping between identification information of the network slice subnet and identification information of the network service descriptor.

**Table 2**

| IDENTIFICATION INFORMATION OF A NETWORK SLICE SUBNET | IDENTIFICATION INFORMATION OF A NETWORK SERVICE DESCRIPTOR OF THE NETWORK SLICE SUBNET |
|---|---|
| R1 | D1 |
| R2 | D2 |
| ... | ... |
| Rn | Dn |

In an embodiment, when both the third mapping relation and the fourth mapping relation take the form of a mapping table, a third mapping table for storing the third mapping relation and a fourth mapping table for storing the fourth mapping relation may be two subtables of a same table. In an embodiment, the third mapping relation or the fourth mapping relation may take the form of a preset algorithm. In an embodiment, a third preset algorithm or a fourth preset algorithm may be at least one of the neural network algorithm, the deep learning algorithm, the boltzmann machine algorithm or the like.

Similar to the first mapping relation and the second mapping relation, the third mapping relation and the fourth mapping relation are collectively referred to as a second overall mapping relation. When both the first overall mapping relation and the second overall mapping relation take the form of a mapping table, the mapping tables may be configured in advance by a network manager or the slice provider. After mapping relations are configured, the network slice creation system may determine, according to one piece of information of the table, another piece of information corresponding to the one piece of information. This is similar to the process of getting an "output" from an "input". A relationship between all inputs and outputs is already fixed in such a mapping relation. Therefore, the manner where the mapping relation is stored in the mapping table is referred to as "static mapping" in the embodiment. In the case of using the preset algorithm as the mapping relation, the mapping is also the process of obtaining the corresponding output according to the input, but in this mapping relation, multiple parameters, such as an algorithm type, an algorithm level, an algorithm scale and the like, of the preset algorithm may be adjusted, and the mapping relation also changes once a related parameter of the preset algorithm changes. Therefore, the solution where the preset algorithm represents the mapping is referred to as "dynamic mapping" in the embodiment. Therefore, the network slice creation system may use the static mapping mode or the dynamic mapping mode to perform the process of decomposing the to-be-created network slice according to the slice demand information of the to-be-created network slice, the process of decomposing the function and the performance of the to-be-created network slice according to the slice demand information of the to-be-created network slice, and the process of obtaining the corresponding deployment description information according to the obtained slice subnet demand information of the to-be-created network slice after decomposition.

In S108, the each to-be-created network slice subnet is deployed according to the deployment description information of the each to-be-created network slice subnet so that the to-be-created network slice is created.

After obtaining the deployment description information corresponding to the each to-be-created network slice subnet, the network slice creation system may create and deploy the to-be-created network slice subnet according to indication of the deployment description information. The deployment description information generally includes network service deployment information and link deployment information (for example, link deployment information between network services or link deployment information between components within a network service). The network service deployment information is used for indicating what virtual network function (VNF) or the like should the network slice creation system create, configuration data of the VNF, and the like. In an embodiment, the network service deployment information includes to-be-created VNF deployment information and inter-VNF link deployment information, and the VNF deployment information includes deployment description of computing, storage, and network resources within the VNF. The link deployment information is used for indicating creation of a network connection of one network slice subnet to the external. The network connection here is generally a network connection between one network slice subnet and other network slice subnets. In an embodiment, one network slice may include only one network slice subnet, so the link deployment information may be null. The network service deployment information includes a VNF needed to be created and the inter-VNF link deployment information used for creating the network slice subnet. Therefore, in the embodiment, the network slice creation system may deploy, according to the network service deployment information, the VNF required by the network slice subset and the inter-VNF link deployment information, and create the network connection according to the link deployment information in the case where the link deployment information is not null, so as to implement communication between the network slice subnet and other network slice subnets, thereby deploying the to-be-created network slice.

Through the network slice creation method provided in the embodiment, the network slice creation system may determine the corresponding to-be-created network slice subnet of the to-be-created network slice according to the slice demand information, for example, the slice SLA indicator information; and then decompose the function and performance requirements of the to-be-created network slice into function and performance requirements of the each to-be-created network slice subnet, that is, obtain the slice subnet demand information of the to-be-created network slice subnet. After that, the network slice creation system may obtain, according to the mapping relation between the slice subnet demand information and the deployment description information of the to-be-created network slice subnet, the deployment description information specific to the to-be-created network slice subnet; and deploy the to-be-created network slice subnet according to the corresponding deployment description information, and create the corresponding to-be-created network slice subnet so as to form the corresponding network slice and implement deployment of the network slice. Thereby, the network slice is applied in practice, so that communication experience of the users is improved by using the network slice.

### Embodiment two:

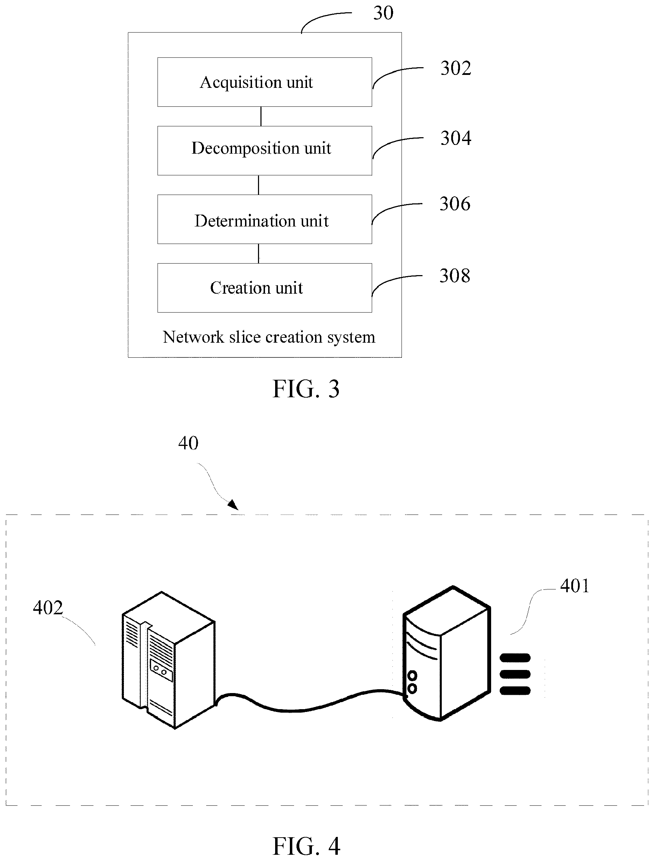

According to an embodiment, a network slice creation system is further described in conjunction with an example. The network slice creation system may create, according to a network slice creation method, a network slice needed by a slice demander. Reference can be made to a schematic structural diagram of the network slice creation system provided by FIG. 3.

The network slice creation system 30 includes an acquisition unit 302, a decomposition unit 304, a determination unit 306 and a creation unit 308. In the embodiment, the acquisition unit 302 is configured to acquire slice demand information of a to-be-created network slice; the decomposition unit 304 is configured to determine, according to the slice demand information, at least one to-be-created network slice subnet corresponding to the to-be-created network slice, and determine slice subnet demand information of each to-be-created network slice subnet according to the slice demand information; the determination unit 306 is configured to determine deployment description information of the each to-be-created network slice subnet according to the slice subnet demand information of the each to-be-created network slice subnet; and the creation unit 308 is configured to deploy the each to-be-created network slice subnet according to the deployment description information of the each to-be-created network slice subnet so as to create the to-be-created network slice.

In an embodiment, the acquisition unit 302 is configured to acquire the slice demand information of the to-be-created network slice from a CSMF network element. The CSMF network element may convert, according to an SLA, a communication service demand for the to-be-created network slice sent by the slice demander to obtain the slice demand information.

The decomposition unit 304 determines, according to the slice demand information obtained from the acquisition unit 302, the at least one to-be-created network slice subnet corresponding to the to-be-created network slice; and then decomposes function and performance requirements for the to-be-created network slice onto the each to-be-created network slice subnet. In an embodiment, the decomposition unit 304 may decompose the to-be-created network slice according to a first mapping relation, and decompose function and performance of the to-be-created network slice according to a second mapping relation so as to obtain a to-be-created network slice subnet having the slice subnet demand information. If the slice demand information transmitted to the decomposition unit 304 by the acquisition unit 302 is slice SLA indicator information, then after decomposition of the decomposition unit 304, the to-be-created network slice subnet and the corresponding slice subnet SLA indicator information (that is the slice subnet demand information of the to-be-created network slice subnet) may be obtained. In an embodiment, the first mapping relation and the second mapping relation here may be stored in forms of mapping tables, and the decomposition unit 304 implements decomposition and mapping from the to-be-created network slice to the to-be-created network slice subnet, and decomposition and mapping from the function and the performance of the to-be-created network slice to the function and the performance of the to-be-created network slice subnet according to this type of static mapping. The first mapping relation and the second mapping relation may also be reflected by preset algorithms, for example, a first preset algorithm and a second preset algorithm, respectively. When the mapping relation is reflected by a preset algorithm, the mapping relation may change with a preset algorithm parameter, and thus the mapping is a dynamic mapping relation. The preset algorithm parameter includes, but is not limited to, at least one of an algorithm type, an algorithm level, an algorithm scale or the like. Therefore, when the preset algorithms represent the first mapping relation and the second mapping relation, the decomposition unit 304 may implement the decomposition and mapping from the to-be-created network slice to the to-be-created network slice subnet, and the decomposition and mapping from the function and the performance of the to-be-created network slice to the function and the performance of the to-be-created network slice subnet according to the dynamic mapping relation. In an embodiment, parameters of the first preset algorithm and the second preset algorithm may be configured in advance, and do not change subsequently.

After determining the each to-be-created network slice subnet and the slice subnet demand information of the each to-be-created network slice subnet according to decomposition results of the decomposition unit 304, the determination unit 306 may determine, according to a third mapping relation, a network service descriptor corresponding to the each to-be-created network slice subnet, and then convert, according to a fourth mapping relation, the slice subnet demand information into deployment description information specific to the network service descriptor. The deployment description information of the to-be-created network slice subnet is used for indicating creation of the to-be-created network slice subnet. For example, the deployment description information includes network service deployment information and link deployment information. The creation unit 308 may create and configure, according to the network service deployment information on a network element specified by the network service descriptor deployment information, a VNF needed by the network slice subnet corresponding to the deployment information; and create a network connection according to the link deployment information in the case where the link deployment information is not null, so as to implement communication between the network slice subnet and other network slice subnet.

The above description only briefly introduces the structure and the function of the network slice creation system. For details of a process where the network slice creation system perform the network slice creation method, see the description of embodiment one. The details will not be repeated here. The network slice creation system provided by the embodiment may be deployed on at least one server. Function of the acquisition unit 302 may be implemented by a communication apparatus of the server. Functions of the decomposition unit 304, the determination unit 306 and the creation unit 308 may all be implemented by a processor of the server. If the acquisition unit 302 uses the slice SLA indicator information received from the CSMF network element as the slice demand information of the to-be-created network slice, and the CSMF network element is also deployed on the server, then the function of the acquisition unit 302 may be directly implemented by the processor.

The network slice creation system provided by the embodiment may determine the corresponding to-be-created network slice subnet of the to-be-created network slice according to the slice demand information, for example, the slice SLA indicator information, of the to-be-created network slice; and then decompose function and performance requirements of the to-be-created network slice into function and performance requirements of the each to-be-created network slice subnet, that is, obtain the slice subnet demand information of the to-be-created network slice subnet. After that, the network slice creation system may obtain, according to the mapping relation between the deployment description information and the slice subnet demand information of the to-be-created network slice subnet, the deployment description information specific to the to-be-created network slice subnet; and deploy the to-be-created network slice subnet according to the corresponding deployment description information, and create the corresponding to-be-created network slice subnet so as to form the corresponding network slice and implement deployment of the network slice. Thereby, the network slice is applied in practice, so that communication experience of users is improved by using the network slice.

### Embodiment three:

An embodiment first provides a storage medium. The storage medium stores one or more computer programs that may be read, compiled or executed by a processor. The computer programs include a network slice creation program. The network slice creation program may be executed by one or more processors so that the network slice creation method provided in the preceding embodiment is performed.

An embodiment further provides a network device. The network device may include a computing component, a storage component and a network resource component. The computing component may be composed of M devices having computing and processing function. The storage component may be composed of N devices having storage function. The network resource component is configured to communicatively connect the computing component to the storage component. In the embodiment, the computing component and the storage component may be deployed on different hardware devices, meanwhile, M and N are both greater than or equal to 1, and values of M and N may be equal or different. Therefore, a same type of components may be distributed on a same hardware device or distributed on different hardware devices. In an embodiment, as shown in FIG. 4, the network device 40 includes a first hardware device 401 and a second hardware device 402. The computing component is deployed on the first hardware device 401, the storage component is deployed on the second hardware device 402, and the first hardware device 401 is communicatively connected to the second hardware device 402. The first hardware device 401 is communicatively connected to the second hardware device 402 in a wired mode or a wireless mode.

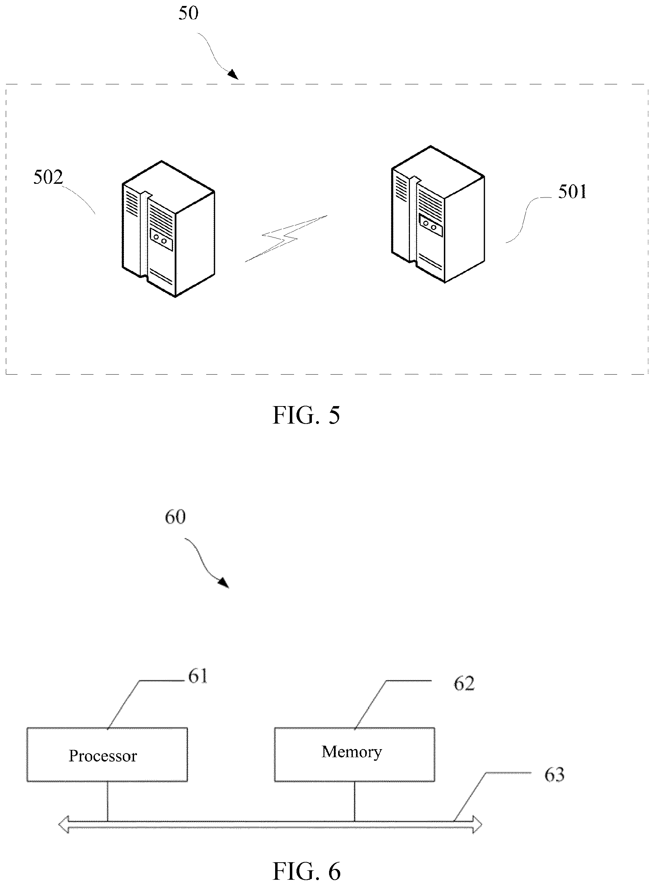

In another embodiment, as shown in FIG. 5, a network device 50 includes a third hardware device 501 and a fourth hardware device 502. The computing component is distributed on both the third hardware device 501 and the fourth hardware device 502, and the storage component is distributed on both the third hardware device 501 and the fourth hardware device 502. The third hardware device 501 is communicatively connected to the fourth hardware device 502 in the wireless mode. Of course, in other embodiments, the third hardware device 501 may be communicatively connected to the fourth hardware device 502 in the wired mode.

A network device composed of only one hardware device is provided below, as shown in FIG. 6. A network device 60 includes a processor 61, a memory 62 and a communication bus 63. The memory 62 may be the preceding computer-readable storage medium storing the network slice creation program. The processor 61 may read the network slice creation program stored in the memory 62, and compile and execute the program to perform the network slice creation method provided in the preceding embodiment.

In an embodiment, the process of decomposing a to-be-created network slice to obtain a to-be-created network slice subnet and function and performance requirements for the to-be-created network slice subnet may be executed by a network slice management function (NSMF) network element; and the process of obtaining deployment description information of the to-be-created network slice subnet according to slice subnet demand information of the to-be-created network slice subnet may be executed by a network slice subnet management function (NSSMF) network element. Therefore, the network device 60 includes at least the NSMF network element and the NSSMF network element. In the embodiment, the two network elements are both deployed on one hardware device, that is, the network device 60. In an embodiment, the NSMF network element and the NSSMF network element may alternatively be deployed on different hardware devices.

In addition, the process of deploying and creating the to-be-created network slice subnet according to the deployment description information of the to-be-created network slice subnet may be implemented by a manager and orchestrator (MANO) and a software defined network controller (SDNO). The MANO and the SDNO may also be deployed on a same hardware device as at least one of the NSMF network element or the NSSMF network element. The MANO includes a network function virtual orchestrator (NFVO), virtual network function management (VNFM) and network function virtualization infrastructure (NFVI).

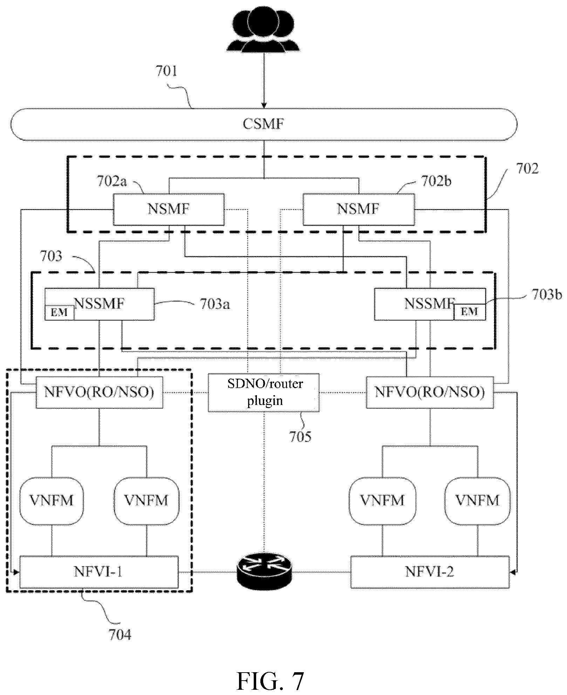

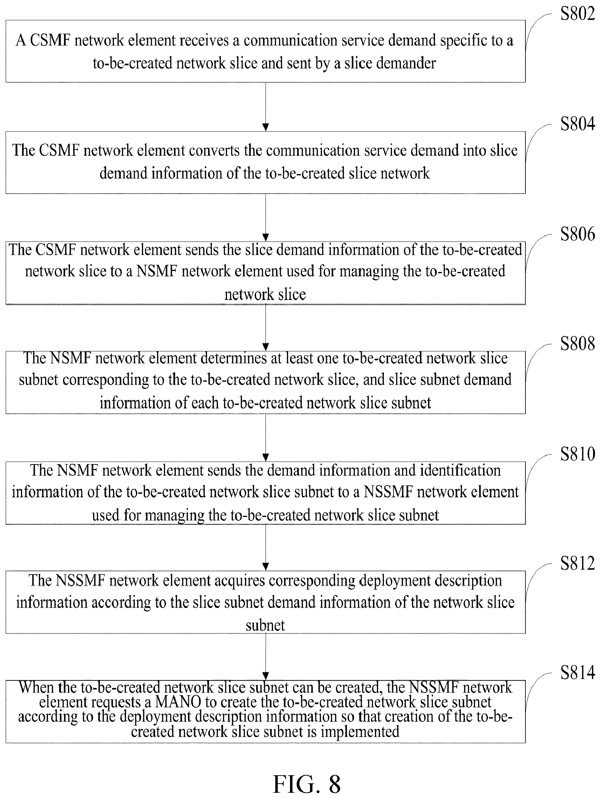

A network slice creation method in an embodiment of the present disclosure is described below with conjunction with FIGs. 7 and 8. FIG. 7 illustrates a network slice management system, and the network slice management system 7 may include a network slice creation system used for creating a network slice. FIG. 8 illustrates a flowchart of creating the network slice in the network slice management system.

In S802, a CSMF network element receives a communication service demand specific to the to-be-created slice network and sent by a slice demander.

In the embodiment, a tap water operation company is used as an example of the slice demander. The tap water operation company subscribes a network slice communication service through a subscription client provided by a slice provider, and puts forward a communication service requirement for the network slice through the subscription client. For example, a slice type is internet of things, the number of terminals is 5 million, meter reading is performed between 0 o'clock and 6 o'clock in the morning every day, the maximum latency of a single user is not more than 10 ms, the meter reading is performed on at most 2000 terminals simultaneously, and the like.

In S804, the CSMF network element converts the communication service demand into slice demand information of the to-be-created slice network.

In the embodiment, the slice demand information of the to-be-created slice network may be SLA indicator information, so after receiving a demand from the subscription client, the CSMF network element 701 converts the communication service demand of a client into the slice SLA indicator information. The slice SLA indicator information includes, but is not limited to, the following contents:(1) user capacity, the number of online users, a traffic model and the like; (2) a peak rate, an average rate, a guaranteed rate, a business class, a sharing requirement and the like; (3) a quality of service (QoS) guarantee parameter (a bandwidth/latency/jitter/packet loss rate or the like), a disaster tolerance mode, acceleration support and the like; (4) a security level (an isolation mode), a slice type (network of human/ network of things) and the like; (5) fault recovery time, KPI monitoring and statistical requirements, a fault management requirement, a configuration management requirement and the like.

In S806, the CSMF network element sends the slice demand information of the to-be-created network slice to the NSMF network element used for managing the to-be-created network slice.

In FIG. 7, the network slice management system 7 includes two NSMF network elements 702, so which type of network slice is to be managed by each NSMF network element 702 may be predetermined to facilitate division of network slice management of the NSMF network elements 702. For example, if a first NSMF network element 702a is used for managing a network slice of network of things, and a second NSMF network element 702b is used for managing a network slice of network of human, then the CSMF network element 701 may send the slice demand information, that is, the slice SLA indicator information, of the to-be-created network slice requested by the tap water operation company to the first NSMF network element 702 a.

In S808, the NSMF network element determines at least one to-be-created network slice subnet corresponding to the to-be-created network slice, and slice subnet demand information of each to-be-created network slice subnet.

The slice demand information includes slice function information and slice performance information. The NSMF network element 702 may determine, according to a first mapping relation and the slice function information of the to-be-created network slice, the at least one to-be-created network slice subnet corresponding to the to-be-created network slice; and determine, according to a second mapping relation and the slice performance information of the to-be-created network slice, the slice subnet demand information of the to-be-created network slice subnet. For the determination process, see the description of embodiment one. In the embodiment, if the slice demand information of the to-be-created network slice is based on an SLA, then the slice subnet demand information of the to-be-created network slice subnet also includes an SLA indicator. However, these SLA indicators are slice subnet SLA indicator information of the to-be-created network slice subnet.

In the embodiment, the first mapping relation and the second mapping relation may be static mapping relations represented by mapping tables or dynamic mappings reflected by preset algorithms.

In S810, the NSMF network element sends the slice demand information and identification information of the to-be-created network slice subnet to the NSSMF network element used for managing the to-be-created network slice subnet.

Similar to the NSMF network element 702 of the network slice management system, the number of NSSMF network elements 703 may be more than one. In FIG. 7, the network slice management system 7 includes two NSSMF network elements 703. Assuming that the NSMF network element 702 determines that the to-be-created network slice subnet includes network slice subnets a, b, c, d and e after performing decomposition and mapping for the to-be-created network slice, a first NSSMF network element 703a may manage network slice subnets a, b and d, and a second NSSMF network element 703b may manage network slice subnets c and e.

Therefore, the NSMF network element 702 may send identification information of to-be-created slice subnet a and slice subnet demand information of to-be-created slice subnet a to the first NSSMF network element 703a, and send identification information of to-be-created slice subnet b and slice subnet demand information of to-be-created slice subnet b to the second NSSMF network element 703a.

In S812, the NSSMF network element acquires corresponding deployment description information according to the slice subnet demand information of the network slice subnet.

After acquiring the identification information of the to-be-created network slice sent by the NSMF network element 702, the NSSMF network element 703 may determine, according to the identification information and a third mapping relation, a network service descriptor, that is, NSD, corresponding to the network slice subnet; and then convert, according to a fourth mapping relation, the slice subnet demand information of the to-be-created network slice subnet into the deployment description information specific to the network service descriptor.

The third mapping relation and the fourth mapping relation may take the form of mapping table or preset algorithm. In an embodiment, the third mapping relation includes a mapping relation between the to-be-created network slice subnet and the network service descriptor, that is, a mapping relation between the identification information of the to-be-created network slice subnet and the network service descriptor. The fourth mapping relation includes a mapping relation between the slice subnet demand information and the deployment description information, that is, a mapping relation between the slice subnet SLA indicator information and the deployment description information.

In S814, when the to-be-created network slice subnet can be created, the NSSMF network element requests the MANO to create the to-be-created network slice subnet according to the deployment description information so that creation of the to-be-created network slice subnet is implemented.

After acquiring the deployment description information of the to-be-created network slice subnet, the NSSMF network element 703 may transmit the deployment description information to the NFVO of the corresponding manager and orchestrator 704. The NFVO initiates a resource reserve application to the NFVI so as to determine whether the NFVI has enough resources to satisfy the creation of the to-be-created network slice subnet.

The manager and orchestrator 704 notifies a resource reserve result to the NSSMF network element 703. The NSSMF network element 703 determines whether to create the corresponding network slice subnet according to the resource reserve result. When the NSSMF network element 703 determines to create the network slice subnet, the NSSMF network element 703 initiates a create request to the manager and orchestrator 704. The manager and orchestrator 704 analyzes, according to deployment description information of the to-be-created network slice subnet, whether a corresponding network connection needs to be created. If the corresponding network connection needs to be created, the manager and orchestrator 704 initiates creation through a software defined network (SDN) controller (or a router controller plugin) 705.

The NFVO in the manager and orchestrator 704 interacts with the VNFM and the NFVI, creates each VNF of the network service descriptor according to a virtual network function descriptor (VNFD, description of the VNF) in an indirect mode or a direct mode, and delivers configuration data through element management (EM) or the NSSMF.

When multiple network slice subnets of the network slice are created and network connections between the multiple network slice subnets are established, the network slice is successfully deployed. At this time, a user terminal may access and use the slice through network slice selection assistance information (NSSAI) or a data network name (DNN).

The network device provided by the embodiment can determine at least one network slice subnet corresponding to the to-be-created network slice, and decompose the function and performance requirements for the whole network slice into the function and performance requirements for the each network slice subnet. After that, the network device acquires the deployment description information specific to the each network slice subnet, and deploys the network slice subnet according to the corresponding deployment description information, thereby decomposing overall deployment of the network slice into deployment of the each network slice subnet. Through the network slice creation solution provided by the embodiment of the present disclosure, creation of the network slice is performed in a decomposition manner on the basis of expectation on the network slice from the slice demander. This can implement technical idea of the network slice, and has a practical capability of providing service for users, thereby improving communication experience of the users.

At least one module or at least one step of the above embodiments of the present disclosure may be implemented by a general computing apparatus, and the above at least one module or at least one step may be concentrated on a single computing apparatus or distributed on a network composed of multiple computing apparatuses. In an embodiment, the above at least one module or at least one step may be implemented by program codes executable by the computing apparatuses, so that the above at least one module or at least one step may be stored in a computer storage medium (read-only memory (ROM)/random access memory (RAM), magnetic disk and optical disk) and be executed by the computing apparatuses. In some circumstances, the illustrated or described steps may be executed in sequences different from those described herein, or the above at least one module or at least one step may be separately made into at least one integrated circuit module, or multiple modules or steps of the above at least one module or at least one step may be made into a single integrated circuit module for implementation. Therefore, the present disclosure is not limited to any specific combination of hardware and software.

## Claims

1. A network slice creation method, comprising:
acquiring (S102) slice demand information of a to-be-created network slice;
determining (S104), according to the slice demand information, at least one to-be-created network slice subnet corresponding to the to-be-created network slice, and determining slice subnet demand information of each to-be-created network slice subnet according to the slice demand information;
determining (S106) deployment description information of the each to-be-created network slice subnet according to the slice subnet demand information of the each to-be-created network slice subnet; and
deploying (S108) the each to-be-created network slice subnet according to the deployment description information of the each to-be-created network slice subnet so as to create the to-be-created network slice;
**characterized in that**, the slice demand information comprises slice function information and slice performance information; and
wherein the determining (S104), according to the slice demand information, the at least one to-be-created network slice subnet corresponding to the to-be-created network slice and determining the slice subnet demand information of the each to-be-created network slice subnet according to the slice demand information comprises:
determining, according to a first mapping relation and the slice function information of the to-be-created network slice, the at least one to-be-created network slice subnet corresponding to the to-be-created network slice, and decomposing the slice function information and the slice performance information onto the at least one to-be-created network slice subnet according to a second mapping relation to form the slice subnet demand information of the each to-be-created network slice subnet.

2. The network slice creation method of claim 1, wherein the slice demand information is slice service-level agreement, SLA, indicator information of the to-be-created network slice.

3. The network slice creation method of claim 2, wherein the slice SLA indicator information comprises at least one of user capacity or a quality of service guarantee parameter of the to-be-created network slice.

4. The network slice creation method of claim 3, wherein the quality of service guarantee parameter comprises a bandwidth, a latency, a jitter and a packet loss rate required by the to-be-created network slice; and the slice SLA indicator information further comprises at least one of a number of online users, a traffic model, a peak rate, an average rate, a guarantee rate, a business class, a sharing requirement, a disaster tolerance mode, an acceleration support mode, a security level, a slice type, fault recovery time, key performance indicators monitoring and statistical requirements, a fault management requirement or a configuration management requirement of the to-be-created network slice.

5. The network slice creation method of claim 2, 3 or 4, wherein the acquiring (S102) the slice demand information of the to-be-created network slice comprises:
receiving the slice SLA indicator information of the to-be-created network slice sent by a communication service management function, CSMF, network element, wherein the slice SLA indicator information is obtained through conversion performed by the CSMF network element from a demand of a network slice demander.

6. The network slice creation method of claim 1, wherein the deployment description information comprises network service deployment information and link deployment information between network services, and the network service deployment information comprises to-be-created virtual network function, VNF, deployment information and inter-VNF link deployment information; and
wherein the deploying (S108) the each to-be-created network slice subnet according to the deployment description information of the each to-be-created network slice subnet so as to create the to-be-created network slice comprises:
creating a network slice subnet according to the VNF deployment information and the inter-VNF link deployment information of the each to-be-created network slice subnet, and in a case where the link deployment information of the network slice subnet is not null, creating a network link between slice subnets according to the link deployment information of the network slice subnet to implement communication between the network slice subnet and other network slice subnet, so as to create the to-be-created network slice.

7. The network slice creation method of claim 1, wherein the determining (S106) the deployment description information of the each to-be-created network slice subnet according to the slice subnet demand information of the each to-be-created network slice subnet comprises:
determining a network service descriptor of the each to-be-created network slice subnet according to a third mapping relation; and
converting, according to a fourth mapping relation, the slice subnet demand information of the each to-be-created network slice subnet into the deployment description information specific to the network service descriptor of the each to-be-created network slice subnet.

8. A network device (60), comprising a computing component (61), a storage component (62) and a network resource component (63), wherein the network resource component (63) is configured to implement connection and communication between the computing component (61) and the storage component (62); and
wherein the computing component (61) is configured to execute at least one program stored in the storage component (62) to perform a network slice creation method,
wherein the network slice creation method comprises:
acquiring slice demand information of a to-be-created network slice;
determining, according to the slice demand information, at least one to-be-created network slice subnet corresponding to the to-be-created network slice, and determining slice subnet demand information of each to-be-created network slice subnet according to the slice demand information;
determining deployment description information of the each to-be-created network slice subnet according to the slice subnet demand information of the each to-be-created network slice subnet; and
deploying the each to-be-created network slice subnet according to the deployment description information of the each to-be-created network slice subnet so as to create the to-be-created network slice;
**characterized in that**, the slice demand information comprises slice function information and slice performance information; and
wherein the determining, according to the slice demand information, the at least one to-be-created network slice subnet corresponding to the to-be-created network slice and determining the slice subnet demand information of the each to-be-created network slice subnet according to the slice demand information comprises:
determining, according to a first mapping relation and the slice function information of the to-be-created network slice, the at least one to-be-created network slice subnet corresponding to the to-be-created network slice, and decomposing the slice function information and the slice performance information onto the at least one to-be-created network slice subnet according to a second mapping relation to form the slice subnet demand information of the each to-be-created network slice subnet.

9. A computer-readable storage medium comprising instructions which, when executed by at least one processor (61), cause the at least one processor (61)to perform the network slice creation method of any one of claims 1 to 7.

## Patentansprüche

1. Verfahren zum Anlegen von Netzwerk-Slices, das Folgendes umfasst:
Erheben (S102) von Slice-Anfrageinformationen eines anzulegenden Netzwerk-Slice;
Bestimmen (S104) gemäß den Slice-Anfrageinformationen mindestens eines anzulegenden Netzwerk-Slice-Teilnetzes, das dem anzulegenden Netzwerk-Slice entspricht, und Bestimmen von Slice-Teilnetz-Anfrageinformationen jedes anzulegenden Netzwerk-Slice-Teilnetzes gemäß den Slice-Anfrageinformationen; Bestimmen (S106) von Einsatzbeschreibungsinformationen jedes anzulegenden Netzwerk-Slice-Teilnetzes gemäß den Slice-Teilnetz-Anfrageinformationen jedes anzulegenden Netzwerk-Slice-Teilnetzes; und
Einsetzen (S108) jedes anzulegenden Netzwerk-Slice-Teilnetzes gemäß den Einsatzbeschreibungsinformationen jedes anzulegenden Netzwerk-Slice-Teilnetzes, um das anzulegende Netzwerk-Slice anzulegen;
**dadurch gekennzeichnet, dass** die Slice-Anfrageinformationen Slice-Funktionsinformationen und Slice-Leistungsinformationen umfassen; und
wobei das Bestimmen (S104) gemäß den Slice-Anfrageinformationen des mindestens einen anzulegenden Netzwerk-Slice-Teilnetzes, das dem anzulegenden Netzwerk-Slice entspricht, und das Bestimmen der Slice-Teilnetz-Anfrageinformationen jedes anzulegenden Netzwerk-Slice-Teilnetzes gemäß den Slice-Anfrageinformationen Folgendes umfassen:
Bestimmen gemäß einer ersten Abbildungsbeziehung und den Slice-Funktionsinformationen des anzulegenden Netzwerk-Slice, des mindestens einen anzulegenden Netzwerk-Slice-Teilnetzes, das dem anzulegenden Netzwerk-Slice entspricht, und Aufgliedern der Slice-Funktionsinformationen und der Slice-Leistungsinformationen auf das mindestens eine anzulegende Netzwerk-Slice-Teilnetz gemäß einer zweiten Abbildungsbeziehung, um die Slice-Teilnetz-Anfrageinformationen jedes anzulegenden Netzwerk-Slice-Teilnetzes zu bilden.

2. Netzwerk-Slice-Anlegungsverfahren nach Anspruch 1, wobei die Slice-Anfrageinformation eine Slice-Service-Level-Agreement-Indikatorinformationen, SLA-Indikatorinformationen, des anzulegenden Netzwerk-Slice sind.

3. Netzwerk-Slice-Anlegungsverfahren nach Anspruch 2, wobei die Slice-SLA-Indikatorinformationen mindestens eine einer Benutzerkapazität oder eines Dienstgüte-Garantieparameters des anzulegenden Netzwerk-Slice umfasst.

4. Netzwerk-Slice-Anlegungsverfahren nach Anspruch 3, wobei der Dienstgüte-Garantieparameter eine Bandbreiten, eine Latenz, einen Jitter und eine Paketverlustrate umfasst, die von dem anzulegenden Netzwerk-Slice benötigt werden; und die Slice-SLA-Indikatorinformationen ferner mindestens eines einer Anzahl von Online-Benutzern, eines Verkehrsmodells, einer Spitzenrate, einer Durchschnittsrate, eine Garantierate, einer Business-Klasse, einer Anforderung zur gemeinsamen Nutzung, eines Katastrophentoleranzmodus, eines Beschleunigungsunterstützungsmodus, eines Sicherheitsniveaus, eines Slice-Typs, einer Fehlerbehebungszeit, Key-Performance-Indicators-Überwachung und statistischer Anforderungen, einer Fehlermanagement-Anforderung oder einer Konfigurationsmanagement-Anforderung des anzulegenden Netzwerk-Slice umfasst.

5. Netzwerk-Slice-Anlegungsverfahren nach Anspruch 2, 3 oder 4, wobei das Erheben (S102) der Slice-Anfrageinformationen des anzulegenden Netzwerk-Slice Folgendes umfasst:
Empfangen der Slice-SLA-Indikatorinformationen des anzulegenden Netzwerk-Slice, die von einem Kommunikationsdienst-Verwaltungsfunktions-Netzwerkelement, CSMF-Netzwerkelement, gesendet werden, wobei die Slice-SLA-Indikatorinformationen durch Umwandlung erhalten wird, die von dem CSMF-Netzwerkelement aus einer Anfrage eines Netzwerk-Slice-Anfragers erhalten wird.

6. Netzwerk-Slice-Anlegungsverfahren nach Anspruch 1, wobei die Einsatzbeschreibungsinformationen Netzwerkdiensteinsatzinformationen und Link-Einsatzinformationen zwischen Netzwerkdiensten umfassen und die Netzwerkdiensteinsatzinformationen eine anzulegende virtuelle Netzwerkfunktion-Einsatzinformation, VNF-Einsatzinformation und Inter-VNF-Link-Einsatzinformationen umfasst, und
wobei das Einsetzen (S108) jedes anzulegenden Netzwerk-Slice-Teilnetzes gemäß den Einsatzbeschreibungsinformationen jedes anzulegenden Netzwerk-Slice-Teilnetzes, um das anzulegende Netzwerk-Slice anzulegen, Folgendes umfasst:
Anlegen eines Netzwerk-Slice-Teilnetzes gemäß den VNF-Einsatzinformationen und den Inter-VNF-Link-Verbindungs-Einsatzinformationen jedes anzulegenden Netzwerk-Slice-Teilnetzes, und in einem Fall, dass die Link-Einsatzinformationen des Netzwerk-Slice-Teilnetzes nicht null sind, Anlegen eines Netzwerk-Links zwischen Slice-Teilnetzen gemäß den Link-Einsatzinformationen des Netzwerk-Slice-Teilnetzes, um Kommunikation zwischen dem Netzwerk-Slice-Teilnetz und einem anderen Netzwerk-Slice-Teilnetz zu implementieren, um das anzulegende Netzwerk-Slice anzulegen.

7. Netzwerk-Slice-Anlegungsverfahren nach Anspruch 1, wobei das Bestimmen (S106) der Einsatzbeschreibungsinformationen jedes anzulegenden Netzwerk-Slice-Teilnetzes gemäß den Slice-Teilnetz-Anfrageinformationen jedes anzulegenden Netzwerk-Slice-Teilnetzes Folgendes umfasst:
Bestimmen eines Netzwerkdienstdeskriptors jedes anzulegenden Netzwerk-Slice-Teilnetzes gemäß einer dritten Abbildungsbeziehung; und
Umwandeln, gemäß einer vierten Abbildungsbeziehung, der Slice-Teilnetz-Anfrageinformationen jedes anzulegenden Netzwerk-Slice-Teilnetzes in die Einsatzbeschreibungsinformationen, die für den Netzwerkdienstdeskriptor jedes anzulegenden Netzwerk-Slice-Teilnetzes spezifisch sind.

8. Netzwerkvorrichtung (60), die eine Rechenkomponente (61), eine Speicherkomponente (62) und eine Netzwerkressourcenkomponente (63) umfasst, wobei die Netzwerkressourcenkomponente (63) konfiguriert ist, um eine Verbindung und Kommunikation zwischen der Rechenkomponente (61) und der Speicherkomponente (62) zu implementieren; und
wobei die Rechenkomponente (61) konfiguriert ist, um mindestens ein Programm auszuführen, das in der Speicherkomponente (62) gespeichert ist, um ein Netzwerk-Slice-Anlegungsverfahren durchzuführen,
wobei das Netzwerk-Slice-Anlegungsverfahren Folgendes umfasst:
Erheben von Slice-Anfrageinformationen eines anzulegenden Netzwerk-Slice;
Bestimmen gemäß den Slice-Anfrageinformationen mindestens eines anzulegenden Netzwerk-Slice-Teilnetzes, das dem anzulegenden Netzwerk-Slice entspricht, und Bestimmen von Slice-Teilnetz-Anfrageinformationen jedes anzulegenden Netzwerk-Slice-Teilnetzes gemäß den Slice-Anfrageinformationen;
Bestimmen von Einsatzbeschreibungsinformationen jedes anzulegenden Netzwerk-Slice-Teilnetzes gemäß den Slice-Teilnetz-Anfrageinformationen jedes anzulegenden Netzwerk-Slice-Teilnetzes; und
Einsetzen jedes anzulegenden Netzwerk-Slice-Teilnetzes gemäß den Einsatzbeschreibungsinformationen jedes anzulegenden Netzwerk-Slice-Teilnetzes, um das anzulegende Netzwerk-Slice anzulegen;
**dadurch gekennzeichnet, dass** die Slice-Anfrageinformationen Slice-Funktionsinformationen und Slice-Leistungsinformationen umfassen; und
wobei das Bestimmen gemäß den Slice-Anfrageinformationen des mindestens einen anzulegenden Netzwerk-Slice-Teilnetzes, das dem anzulegenden Netzwerk-Slice entspricht, und das Bestimmen der Slice-Teilnetz-Anfrageinformationen jedes anzulegenden Netzwerk-Slice-Teilnetzes gemäß den Slice-Anfrageinformationen Folgendes umfassen:
Bestimmen gemäß einer ersten Abbildungsbeziehung und den Slice-Funktionsinformationen des anzulegenden Netzwerk-Slice, des mindestens einen anzulegenden Netzwerk-Slice-Teilnetzes, das dem anzulegenden Netzwerk-Slice entspricht, und Aufgliedern der Slice-Funktionsinformationen und der Slice-Leistungsinformationen auf das mindestens eine anzulegende Netzwerk-Slice-Teilnetz gemäß einer zweiten Abbildungsbeziehung, um die Slice-Teilnetz-Anfrageinformationen jedes anzulegenden Netzwerk-Slice-Teilnetzes zu bilden.

9. Computerlesbares Speichermedium, das Anweisungen umfasst, die, wenn sie von mindestens einem Prozessor (61) ausgeführt werden, den mindestens einen Prozessor (61) veranlassen, das Netzwerk-Slice-Anlegungsverfahren nach einem der Ansprüche 1 bis 7 durchzuführen.

## Revendications

1. Procédé de création de tranche de réseau, comprenant :
l'acquisition (S102) d'informations de demande de tranche d'une tranche de réseau à créer ;
la détermination (S104), selon les informations de demande de tranche, d'au moins un sous-réseau de tranche de réseau à créer correspondant à la tranche de réseau à créer, et la détermination d'informations de demande de sous-réseau de tranche de chaque sous-réseau de tranche de réseau à créer selon les informations de demande de tranche ;
la détermination (S106) d'informations de description de déploiement de chaque sous-réseau de tranche de réseau à créer selon les informations de demande de sous-réseau de tranche de chaque sous-réseau de tranche de réseau à créer ; et
le déploiement (S108) de chaque sous-réseau de tranche de réseau à créer selon les informations de description de déploiement de chaque sous-réseau de tranche de réseau à créer de manière à créer la tranche de réseau à créer ;
**caractérisé en ce que** les informations de demande de tranche comprennent des informations de fonction de tranche et des informations de performance de tranche ; et
dans lequel la détermination (S104), selon les informations de demande de tranche, de l'au moins un sous-réseau de tranche de réseau à créer correspondant à la tranche de réseau à créer, et la détermination des informations de demande de sous-réseau de tranche de chaque sous-réseau de tranche de réseau à créer selon les informations de demande de tranche comprennent :
la détermination, selon une première relation de mappage et les informations de fonction de tranche de la tranche de réseau à créer, de l'au moins un sous-réseau de tranche de réseau à créer correspondant à la tranche de réseau à créer, et la décomposition des informations de fonction de tranche et des informations de performance de tranche sur l'au moins un sous-réseau de tranche de réseau à créer selon une deuxième relation de mappage pour former les informations de demande de sous-réseau de tranche de chaque sous-réseau de tranche de réseau à créer.

2. Procédé de création de tranche de réseau selon la revendication 1, dans lequel les informations de demande de tranche sont des informations d'indicateur de contrat de niveau de service, SLA, de tranche de la tranche de réseau à créer.

3. Procédé de création de tranche de réseau selon la revendication 2, dans lequel les informations d'indicateur SLA de tranche comprennent au moins l'un parmi la capacité d'utilisateur ou un paramètre de garantie de qualité de service de la tranche de réseau à créer.

4. Procédé de création de tranche de réseau selon la revendication 3, dans lequel le paramètre de garantie de qualité de service comprend une bande passante, une latence, une gigue et un taux de perte de paquets requis par la tranche de réseau à créer ; et les informations d'indicateur SLA de tranche comprennent en outre au moins l'un parmi un certain nombre d'utilisateurs en ligne, un modèle de trafic, un taux de pointe, un taux moyen, un taux de garantie, une classe commerciale, une exigence de partage, un mode de tolérance aux catastrophes, un mode de support d'accélération, un niveau de sécurité, un type de tranche, un temps de reprise sur panne, des exigences statistiques et de surveillance des indicateurs clés de performance, une exigence de gestion des pannes ou une exigence de gestion de la configuration de la tranche de réseau à créer.

5. Procédé de création de tranche de réseau selon la revendication 2, 3 ou 4, dans lequel l'acquisition (S102) des informations de demande de tranche de la tranche de réseau à créer comprend :
la réception des informations d'indicateur SLA de tranche de la tranche de réseau à créer envoyées par un élément de réseau de fonction de gestion de service de communication, CSMF, dans lequel les informations d'indicateur SLA de tranche sont obtenues par conversion effectuée par l'élément de réseau CSMF à partir d'une demande d'un demandeur de tranche de réseau.

6. Procédé de création de tranche de réseau selon la revendication 1, dans lequel les informations de description de déploiement comprennent des informations de déploiement de service réseau et des informations de déploiement de liaison entre des services réseau, et les informations de déploiement de service réseau comprennent des informations de déploiement de fonction de réseau virtuel, VNF, à créer et des informations de déploiement de liaison inter-VNF ; et
dans lequel le déploiement (S108) de chaque sous-réseau de tranche de réseau à créer selon les informations de description de déploiement de chaque sous-réseau de tranche de réseau à créer de manière à créer la tranche de réseau à créer comprend : la création d'un sous-réseau de tranche de réseau selon les informations de déploiement VNF et les informations de déploiement de liaison inter-VNF de chaque sous-réseau de tranche de réseau à créer, et dans un cas où les informations de déploiement de liaison du sous-réseau de tranche de réseau ne sont pas nulles, la création d'une liaison de réseau entre des sous-réseaux de tranche selon les informations de déploiement de liaison du sous-réseau de tranche de réseau pour mettre en œuvre une communication entre le sous-réseau de tranche de réseau et un autre sous-réseau de tranche de réseau, de manière à créer la tranche de réseau à créer.

7. Procédé de création de tranche de réseau selon la revendication 1, dans lequel la détermination (S106) des informations de description de déploiement de chaque sous-réseau de tranche de réseau à créer selon les informations de demande de sous-réseau de tranche de chaque sous-réseau de tranche de réseau à créer comprend :
la détermination d'un descripteur de service de réseau de chaque sous-réseau de tranche de réseau à créer selon une troisième relation de mappage ; et
la conversion, selon une quatrième relation de mappage, des informations de demande de sous-réseau de tranche de chaque sous-réseau de tranche de réseau à créer en informations de description de déploiement spécifiques au descripteur de service de réseau de chaque sous-réseau de tranche de réseau à créer.

8. Dispositif réseau (60), comprenant un composant informatique (61), un composant de stockage (62) et un composant de ressource réseau (63), dans lequel le composant de ressource réseau (63) est configuré pour mettre en œuvre une connexion et une communication entre le composant informatique (61) et le composant de stockage (62) ; et
dans lequel le composant informatique (61) est configuré pour exécuter au moins un programme stocké dans le composant de stockage (62) pour exécuter un procédé de création de tranche de réseau,
dans lequel le procédé de création de tranche de réseau comprend :
l'acquisition d'informations de demande de tranche d'une tranche de réseau à créer ;
la détermination, selon les informations de demande de tranche, d'au moins un sous-réseau de tranche de réseau à créer correspondant à la tranche de réseau à créer, et la détermination d'informations de demande de sous-réseau de tranche de chaque sous-réseau de tranche de réseau à créer selon les informations de demande de tranche ;
la détermination d'informations de description de déploiement de chaque sous-réseau de tranche de réseau à créer selon les informations de demande de sous-réseau de tranche de chaque sous-réseau de tranche de réseau à créer ; et
le déploiement de chaque sous-réseau de tranche de réseau à créer selon les informations de description de déploiement de chaque sous-réseau de tranche de réseau à créer de manière à créer la tranche de réseau à créer ;
**caractérisé en ce que** les informations de demande de tranche comprennent des informations de fonction de tranche et des informations de performance de tranche ; et
dans lequel la détermination, selon les informations de demande de tranche, de l'au moins un sous-réseau de tranche de réseau à créer correspondant à la tranche de réseau à créer, et la détermination des informations de demande de sous-réseau de tranche de chaque sous-réseau de tranche de réseau à créer selon les informations de demande de tranche comprennent :
la détermination, selon une première relation de mappage et les informations de fonction de tranche de la tranche de réseau à créer, de l'au moins un sous-réseau de tranche de réseau à créer correspondant à la tranche de réseau à créer, et la décomposition des informations de fonction de tranche et des informations de performance de tranche sur l'au moins un sous-réseau de tranche de réseau à créer selon une deuxième relation de mappage pour former les informations de demande de sous-réseau de tranche de chaque sous-réseau de tranche de réseau à créer.

9. Support de stockage lisible par ordinateur comprenant des instructions qui, lorsqu'elles sont exécutées par au moins un processeur (61), amènent l'au moins un processeur (61) à exécuter le procédé de création de tranche de réseau selon l'une quelconque des revendications 1 à 7.
